(19) **Europäisches Patentamt / European Patent Office / Office européen des brevets**

(11) **EP 2 440 969 B1**

(12) **FASCICULE DE BREVET EUROPEEN**

(45) Date de publication et mention
de la délivrance du brevet:
**03.04.2019 Bulletin 2019/14**

(51) Int Cl.:
***G02F 1/365*** *(2006.01)*

(21) Numéro de dépôt: **10737989.3**

(22) Date de dépôt: **10.06.2010**

(86) Numéro de dépôt international:
**PCT/FR2010/051162**

(87) Numéro de publication internationale:
**WO 2010/142920 (16.12.2010 Gazette 2010/50)**

(54) **PROCÉDÉ DE GÉNÉRATION D'UN SPECTRE S'ÉTENDANT DEPUIS LE DOMAINE INFRAROUGE JUSQUE DANS LE DOMAINE ULTRAVIOLET ET SOURCE LASER POLYCHROMATIQUE ASSOCIÉE**

VERFAHREN ZUR ERZEUGUNG EINES SPEKTRUMS VOM IR-BEREICH BIS ZUM UV-BEREICH UND ZUGEHÖRIGE POLYCHROME LASERQUELLE

METHOD FOR GENERATING A SPECTRUM EXTENDING FROM THE INFRARED RANGE TO THE ULTRAVIOLET RANGE, AND RELATED POLYCHROMATIC LASER SOURCE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **12.06.2009 FR 0953933**

(43) Date de publication de la demande:
**18.04.2012 Bulletin 2012/16**

(73) Titulaires:
• **Leukos**
  **87069 Limoges (FR)**
• **Université de Limoges**
  **87000 Limoges (FR)**

(72) Inventeurs:
• **VIALE, Pierre**
  **F-87800 Saint Maurice Les Brousses (FR)**
• **LABRUYERE, Alexis**
  **F-87000 Limoges (FR)**
• **BUY, Christelle**
  **F-78350 Les Loges en Josas (FR)**

• **HUSS, Guillaume**
  **F-87000 Limoges (FR)**
• **LEPROUX, Philippe**
  **F-87000 Limoges (FR)**
• **COUDERC, Vincent**
  **F-87430 Verneuil sur Vienne (FR)**

(74) Mandataire: **Aquinov**
  **Allée de la Forestière**
  **33750 Beychac et Caillau (FR)**

(56) Documents cités:
**WO-A-2005/062113    WO-A-2007/006316**

• **TOMBELAINE V ET AL: "Broadband four-wave mixing and supercontinuum generation in multi-component-core photonic crystal fiber" LASERS AND ELECTRO-OPTICS, 2009 AND 2009 CONFERENCE ON QUANTUM ELECTRONICS AND LASER SCIENCE CONFERENCE. CLEO/QELS 2009. CONFERENCE ON, IEEE, PISCATAWAY, NJ, USA, 2 juin 2009 (2009-06-02), pages 1-2, XP031521883 ISBN: 978-1-55752-869-8**

**Description**

La présente invention concerne un procédé de génération d'un spectre s'étendant depuis le domaine infrarouge jusque dans le domaine ultraviolet ainsi qu'une source laser polychromatique associée.

Il est connu que les fibres optiques microstructurées, comprenant généralement un agencement périodique de trous d'air dans une matrice de silice autour d'un coeur de silice, présentent de nombreuses applications, que ce soit dans le domaine des télécommunications, de la biologie notamment médicale, ou encore en spectroscopie, du fait que des phénomènes non linéaires peuvent être engendrés et contrôlés dans le milieu, notamment au moyen d'une structure spécifique de fibre.

Une application particulièrement innovante de ces fibres optiques microstructurées consiste à générer un élargissement spectral dans une bande large de longueurs d'onde, notamment dans les domaines visible et infrarouge, par injection d'un faisceau laser de pompe dans la fibre. Cet élargissement spectral est connu sous le nom de supercontinuum. De telles sources supercontinuum, autrement appelées sources lasers polychromatiques, sont dorénavant bien maîtrisées, et sont fabriquées et commercialisées par différentes sociétés, pour les domaines visible et infrarouge.

Néanmoins, il est très difficile de générer des longueurs d'onde inférieures à 370 nm à partir d'une longueur d'onde du laser de pompe dans le domaine infrarouge.

On connaît par exemple du document WO 2005/062113 et de la publication Tombelaine et al., intitulée « Broadband four-wave mixing and supercontinuum génération in multi-component-core photonic crystal fiber », un procédé de génération d'un spectre par injection d'un faisceau laser émettant dans une longueur d'onde du domaine infrarouge, génération d'un unique mélange à quatre ondes et élargissement spectral. Néanmoins, un tel procédé ne permet pas d'obtenir un spectre s'étendant effectivement depuis l'infrarouge jusque dans l'ultraviolet.

Le but de l'invention est de remédier à cet inconvénient.

A cet effet, l'invention concerne un procédé de génération d'un spectre s'étendant depuis le domaine infrarouge jusque dans le domaine ultraviolet consistant à injecter dans une fibre optique microstructurée au moins bimodale un faisceau d'un laser de pompe émettant dans une longueur d'onde du domaine infrarouge, caractérisé en ce qu'il comprend les étapes suivantes :

- génération dans la fibre d'un premier mélange à quatre ondes ou mélange primaire centré sur la longueur d'onde dudit faisceau laser,
- génération dans la fibre d'un deuxième mélange à quatre ondes centré sur l'une des raies issues du premier mélange à quatre ondes ou raie de pompe secondaire, et

- élargissement spectral autour d'au moins l'une des raies issues du deuxième mélange à quatre ondes.

L'invention concerne également une source laser polychromatique utilisant le procédé de l'invention.

Cette source est la seule qui permette d'atteindre un spectre si large, depuis le domaine infrarouge jusque dans le domaine ultraviolet, à partir d'un laser de pompe dans le domaine infrarouge, ce qui la rend particulièrement adaptée à de nombreuses applications, telles que la métrologie, le diagnostic médical, la spectroscopie ou encore des caractérisations optiques.

L'invention sera décrite maintenant plus en détail en référence aux figures annexées données uniquement à titre d'exemple et dans lesquelles :

- la figure 1 est une représentation schématique d'un montage d'une source supercontinuum conforme à la présente invention et intégrant une fibre optique microstructurée,
- la figure 2 est une vue de face d'un profil d'indice de la fibre de la figure 1,
- la figure 3 est une représentation de la densité spectrale de puissance du supercontinuum généré par la source de la figure 1 (exprimée en $\mu$W/nm) en fonction de la longueur d'onde (exprimée en nm), dans une plage de longueurs d'onde de 400 nm à 1700 nm,
- la figure 4 est une représentation de la densité spectrale de puissance normalisée du supercontinuum généré par la source de la figure 1 (exprimée en u.a.) en fonction de la longueur d'onde (exprimée en nm), dans une plage de longueurs d'onde de 250 nm à 700 nm,
- les figures 5a et 5b sont des représentations de l'évolution du spectre du supercontinuum en fonction de la longueur d'onde respectivement de la figure 3 et de la figure 4 pour différentes valeurs de la puissance incidente,
- la figure 6 est une représentation de l'évolution modale dans un échantillon de longueur centimétrique de la fibre de la figure 1,
- la figure 7 est une représentation du désaccord de phase (exprimée en cm$^{-1}$) calculé théoriquement en fonction de la longueur d'onde (exprimée en nm) pour un premier mélange à quatre ondes et un second mélange à quatre ondes de la source de la figure 1, et
- la figure 8 est une représentation de l'évolution de l'indice effectif des modes effectifs d'une composante verticale de modes électromagnétiques HE11 et HE21, en fonction de la longueur d'onde (exprimé en $\mu$m).

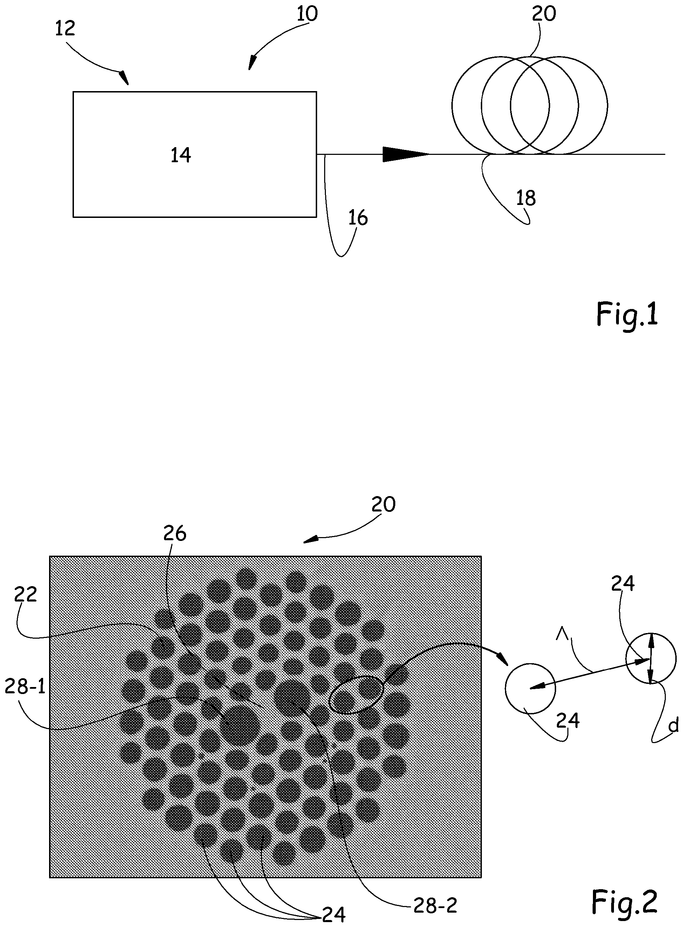

On a représenté en 10 sur la figure 1 un montage d'une source supercontinuum 12 ou laser polychromatique comprenant un laser de pompe 14 et une fibre optique microstructurée 20. Le laser de pompe 14 est apte à délivrer un faisceau de pompe 16 dans la fibre 20, de sorte que la source émette dans le domaine infrarouge, le domaine visible, et le domaine ultraviolet comme il sera détaillé ultérieurement.

Par fibre optique microstructurée, on entend fibre optique comprenant un agencement périodique de deux milieux, ces milieux n'étant pas limités à l'air et à la silice.

Selon un mode de réalisation, le laser 14 est un microlaser de la marque Teem Photonics, préférentiellement de type Nd : YAG et émet des impulsions subnanosecondes, de l'ordre de 600 ps à une longueur d'onde $\lambda_P$ comprise entre 900 et 1100 nm, préférentiellement 1064 nm, et à une fréquence de répétition de l'ordre de 8 kHz et de puissance moyenne 60 mW.

Selon un autre mode de réalisation, le laser 14 est une diode laser.

La fibre microscopique 20 de la source supercontinuum 12 est plus particulièrement détaillée à la figure 2 et comprend des moyens de génération d'un premier mélange à quatre ondes ou mélange primaire centré sur la longueur d'onde du faisceau laser 16 et des moyens de génération d'un deuxième mélange à quatre ondes centré sur l'une des raies issues du premier mélange à quatre ondes ou raie de pompe secondaire, ainsi que des moyens d'élargissement spectral autour d'au moins l'une des raies issues du deuxième mélange à quatre ondes.

Selon un mode de réalisation, ces moyens de génération de deux mélanges à quatre ondes cascadés et ces moyens d'élargissement spectral sont constitués par la structure de la fibre 20.

La fibre 20 comprend une matrice de guidage d'une longueur l inférieure à 10 m dans une direction de guidage dite longitudinale, non représentée, et d'une structure 22 dans un plan transverse à la direction de guidage, autrement appelée profil d'indice 22.

Le profil d'indice 22 comprend un agencement d'un ensemble de trous 24 de diamètre d dont les centres des trous sont régulièrement espacés d'une distance $\Lambda$, autrement appelée pas. Un autre paramètre de la fibre est la fraction d'air qui est définie par le rapport entre le diamètre d des trous 24 et le pas $\Lambda$, c'est-à-dire d/$\Lambda$.

Le profil 22 d'indice comprend également un coeur 26 de silice au centre du réseau cristallin présentant une forme générale elliptique et entouré de deux trous centraux 28-1 et 28-2 disposés de part et d'autre du coeur 26. Les deux trous centraux 28-1 et 28-2 ont un diamètre respectif D1 et D2 plus élevé que le diamètre d des trous 14.

La présence des deux trous centraux 28-1 et 28-2 soumet la fibre 20 à une contrainte asymétrique qui brise la symétrie en $\pi/3$ du profil 22 et contribue à rendre la fibre 20 biréfringente. La forme elliptique du coeur 26 de la fibre 20 contribue également à la biréfringence de la fibre 20.

Le diamètre d des trous 24 est compris entre 2.0 $\mu$m et 3.0 $\mu$m, et la fraction d'air entre 0.70 et 0.80.

Selon un mode de réalisation préféré, le diamètre d est de 2.50 $\mu$m, la fraction d'air d/$\Lambda$ est de 0.76 et le pas $\Lambda$ de 3.30 $\mu$m. Les diamètres D1 et D2 des trous 28-1 et 28-2 sont respectivement de 4.30 et 3.90 $\mu$m.

La fibre optique 20 est au moins bimodale, c'est-à-dire qu'elle permet la propagation d'au moins deux modes transverses dans la fibre 20, ces modes étant préférentiellement $LP_{11}$ et $LP_{01}$.

La fibre 20 est biréfringente et/ou à maintien de polarisation.

Les propriétés de la fibre 20 et en particulier les valeurs du diamètre d des trous 24 et de la fraction d'air d/$\Lambda$ précisées plus haut permettent la génération de deux mélanges à quatre ondes cascadés avec création d'une raie à la longueur d'onde $\lambda_L$ inférieure à 900 nm et préférentiellement de l'ordre de 642.6 nm, comme il sera détaillé ultérieurement, la présence de cette raie permettant l'élargissement spectral dans le domaine ultraviolet.

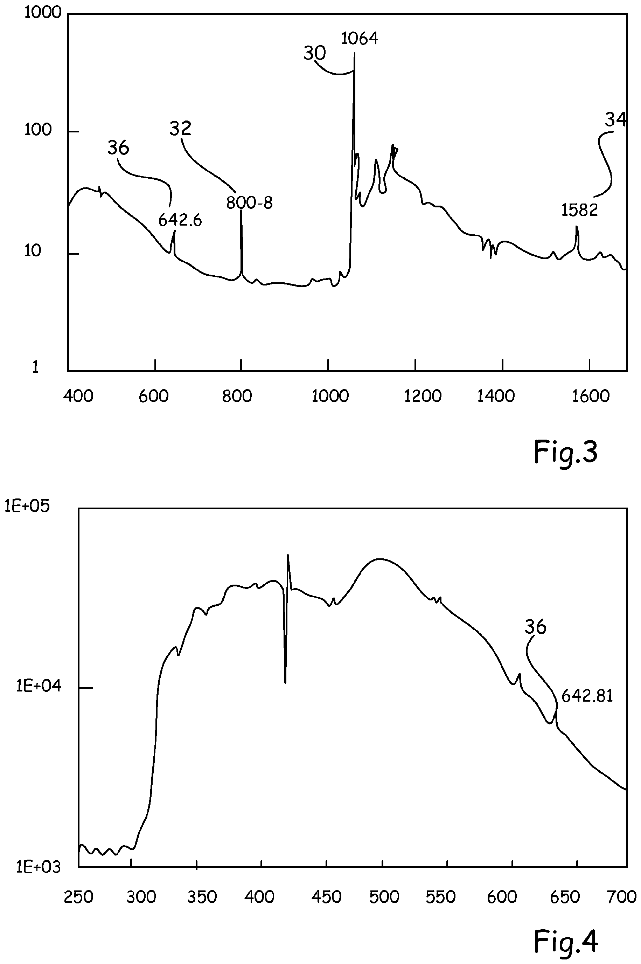

Comme visible à la figure 1, le faisceau 16 issu du laser 14 est injecté à une extrémité d'entrée 18 de la fibre 20 et un analyseur de spectre adéquat permet d'obtenir l'évolution de la distribution spectrale du supercontinuum généré par la source 12 et représentée aux figures 3 et 4. On note que deux analyseurs de spectre différents sont nécessaires pour observer la totalité du spectre, un analyseur de spectre optique vendu sous la désignation ANDO AQ6315E et un spectromètre UV de la marque BWTek, le premier fonctionnant pour des longueurs d'onde entre 400 nm et 1700 nm, et le second pour des longueurs d'onde comprise entre 250 nm et 700 nm.

Comme visible sur la figure 3, la source 12 émet dans le domaine visible et infrarouge, soit entre 400 nm et 1700 nm, et le spectre de la source 12 comprend une raie 30 à la longueur d'onde $\lambda_P$, ainsi que deux raies Stokes et anti-Stokes issues d'un premier mélange à quatre ondes ou mélange primaire, référencées en 32 et 34 et ayant des longueurs d'onde respectives $\lambda_A$ et $\lambda_S$ de l'ordre de 800,8 nm et 1582 nm. Le spectre comprend également une raie 36 à la longueur d'onde $\lambda_L$ de l'ordre de 642,6 nm issue d'un deuxième mélange à quatre ondes ou mélange secondaire. Les deux mélanges sont cascadés et possèdent préférentiellement des décalages fréquentiels identiques F et F' (mélange primaire, mélange secondaire). De manière plus précise, le laser 14 engendre dans la fibre 20, par l'intermédiaire du premier mélange à quatre ondes deux raies positionnées de chaque côté de la raie source et qui sont les raies Stokes et anti-Stokes 32 et 34, comme déjà expliqué. Le décalage en fréquence entre la raie pompe et les raies Stokes et anti-Stokes est noté F. La raie anti-Stokes étant d'une longueur d'onde inférieure, elle possède suffisamment d'énergie pour engendrer le second mélange à quatre onde, dont le décalage fréquentiel est noté F'. Avantageusement, le décalage fréquentiel F' et le décalage F sont identiques. Les deux mélanges à quatre ondes sont cascadés, puisque le premier mélange à quatre ondes entraîne la naissance de l'autre et couplés entre eux.

On note que ces valeurs obtenues expérimentalement satisfont les équations des mélanges primaire et secondaire à quatre ondes et qui sont respectivement :

$$\frac{4\pi}{\lambda_P} = \frac{2\pi}{\lambda_S} + \frac{2\pi}{\lambda_A} \quad et \quad \frac{2\pi}{\lambda_P} + \frac{2\pi}{\lambda_A} = \frac{2\pi}{\lambda_S} + \frac{2\pi}{\lambda_L}.$$

Comme visible à la figure 4, la distribution spectrale de la source 12 montre également la raie 36 à une longueur d'onde $\lambda_L$ de l'ordre de 642,8 nm et la source 12 émet des ondes entre 300 nm et 700 nm, le supercontinuum s'élargissant en deçà de 320 nm, et des photons sont détectés avec le spectromètre utilisé jusqu'à 310 nm. On note que la perturbation dans le spectre à 420 nm est un artefact de mesure dû à un réseau de diffraction que comprend le spectromètre de mesure et n'est pas lié à la présente invention.

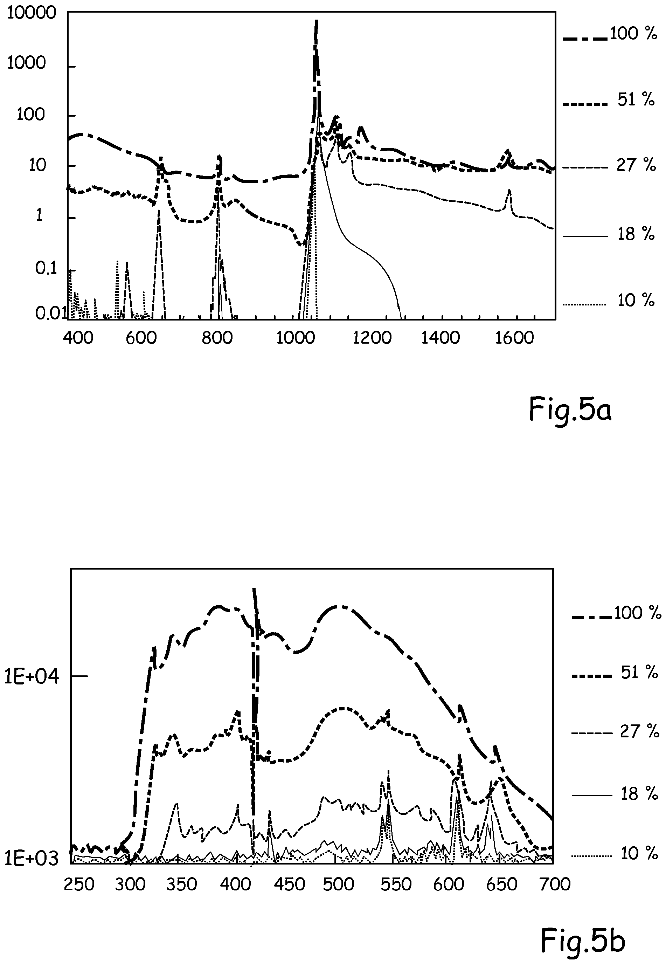

Comme visible aux figures 5a et 5b, l'élargissement spectral augmente avec la puissance du laser 14, seules les raies de mélange étant présentes pour de faibles puissances, inférieures à 27% de la puissance du laser 14. Pour des puissances de laser plus élevées, le supercontinuum est généré, jusqu'à obtenir les spectres des figures 3 et 4 pour 100% de puissance du laser 14. L'élargissement du spectre dans le domaine ultraviolet est initié à partir de la génération du mélange à quatre ondes secondaire et l'on note que le spectre comprend un pic à une longueur d'onde de l'ordre de 350 nm qui augmente avec la puissance du laser 14. Des raies parasites apparaissent pour une longueur d'onde de l'ordre de 530 nm qui sont des répliques des raies du laser 14 et de la raie Raman et ne sont pas liés à la présente invention.

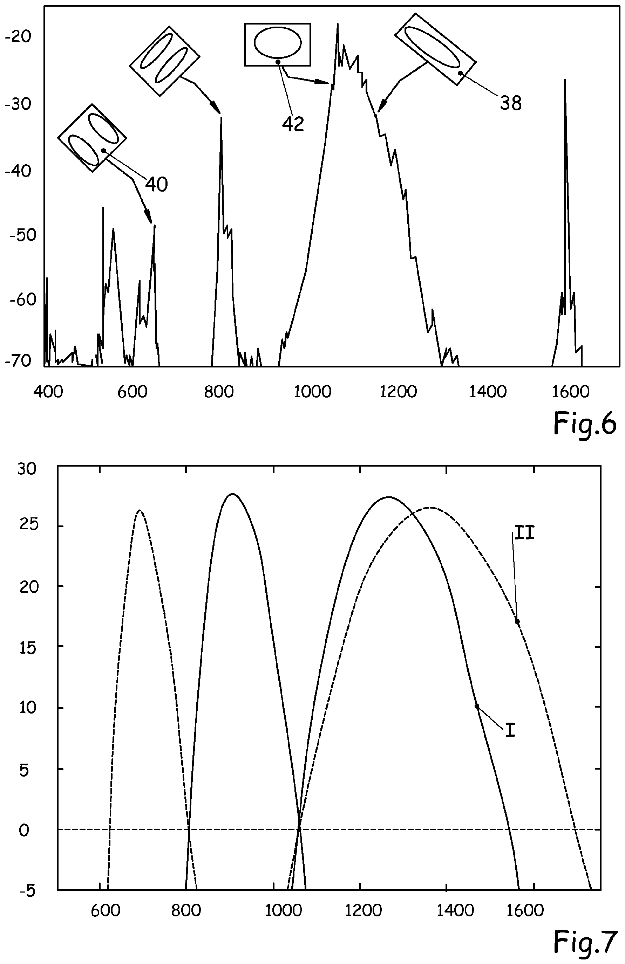

La figure 6 est une représentation du spectre en niveau de puissance (exprimé en dB) en fonction de la longueur d'onde (exprimée en nm) et de la répartition spatiale en champ lointain des modes transverses pour quatre longueurs d'onde.

Comme visible sur cette figure, et comme déjà précisé plus haut, la fibre 20 est au moins bimodale, c'est-à-dire qu'elle permet la propagation d'au moins deux modes transverses dans la fibre 20, ces modes étant préférentiellement le mode fondamental $LP_{01}$ et le mode d'ordre supérieur $LP_{11}$.

Comme illustré à titre d'exemple à la figure 6, pour des longueurs d'onde supérieures à 1100 nm, le spectre se propage de manière préférentielle sur le mode $LP_{01}$, seul le mode $LP_{01}$ est transmis, comme le montre la répartition spatiale 38 à 1150 nm tandis que pour des longueurs d'onde inférieures à 800 nm, le spectre est principalement engendré sur le mode $LP_{11}$ comme le montre la répartition spatiale 40 à 650 nm. Entre 800 nm et 1150 nm, les deux modes se propagent dans la fibre 20, comme le montre la forme particulière de la mesure d'intensité transverse 42 à 1050 nm résultant de la superposition des deux modes de propagation.

La source supercontinuum ou laser polychromatique fonctionne comme suit : le laser 14 émet le faisceau 16 qui pénètre dans la fibre 20 par son extrémité d'entrée 18 et se propage longitudinalement dans celle-ci. Les propriétés déjà décrites de la fibre 20 permettent la réalisation d'un premier mélange à quatre ondes centré sur la longueur d'onde de pompe du laser $\lambda_p$ à 1064 nm et qui génère la raie Stokes 34 à une longueur d'onde de l'ordre de 1580 nm sur le mode $LP_{01}$ et la raie anti-Stokes 32 à une longueur d'onde de l'ordre de 801 nm sur le mode $LP_{11}$. Un deuxième mélange à quatre ondes est alors initié par le premier mode réalisé, centré sur la longueur d'onde de la raie anti-Stokes 32 à 801 nm sur le mode $LP_{11}$ qui constitue la pompe secondaire, et génère la raie 36 anti-Stokes secondaire à $\lambda_L$ de l'ordre de 643 nm sur le mode $LP_{11}$ et une raie Stokes secondaire à 1064 nm sur le mode $LP_{01}$. La présence de la raie 36 permet alors un transfert d'énergie vers les basses longueurs d'onde et l'initiation d'un élargissement spectral dans le domaine ultraviolet, comme déjà expliqué.

Ce fonctionnement est soutenu par un raisonnement théorique, le désaccord de phase étant calculé théoriquement à partir du profil d'indice réel de la fibre 20. Comme visible sur la courbe I de la figure 7, le désaccord de phase obtenu numériquement pour le premier mélange à quatre ondes est nul pour des longueurs d'onde de 809 nm et 1537 nm tandis que, comme visible sur la courbe II avec un faisceau de pompe à 1064 nm, pour le mélange à quatre ondes secondaire, le désaccord de phase nul est obtenu pour 629 nm et 1695 nm, la première pompe étant à 1064 nm et la deuxième pompe à 809 nm. Ces valeurs sont proches des valeurs déterminées expérimentalement et l'écart est dû aux différentes approximations théoriques effectuées.

La courbe I est obtenue notamment à partir du profil d'indice réel de la fibre 20 et du calcul des indices effectifs des modes $LP_{01}$ et $LP_{11}$, effectué selon une méthode connue de l'homme du métier et faisant par exemple appel à un logiciel de calcul basé sur la méthode des éléments finis dénommé COMSOL.

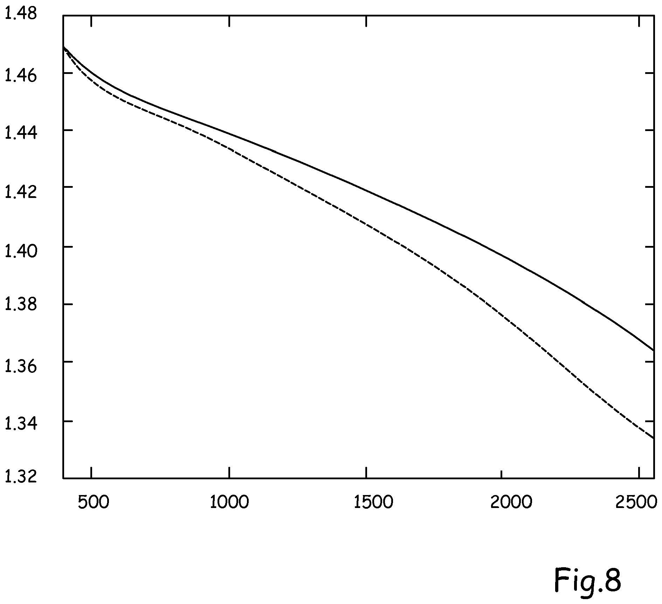

Plus précisément, les modes électromagnétiques HE11x et HE11y sont regroupés en mode LP01. Les modes électromagnétiques HE21x, HE21y, TM01 et TE01 sont regroupés en mode LP11. A partir du profil d'indice réel de la fibre 20, il est possible de calculer les différents indices effectifs des modes électromagnétiques mis en jeu. Les modes électromagnétiques TE01 et TM01 composants le mode LP11 ne sont pas pris en compte dans la structure biréfringente étudiée. Compte tenu de cette biréfringence, le procédé décrit précédemment ne fonctionne que suivant un axe de polarisation. On ne considère dans la suite de calculs que les composantes x de modes HE. On a représenté à la figure 8 les évolutions des indices effectifs de ces modes en fonction de la longueur d'onde. La courbe en trait plein représente la variation d'indices effectifs de la composante verticale du mode HE11, et celle en pointillés la composante verticale du mode électromagnétique HE21.

Le calcul des indices effectifs permet de déterminer le désaccord de phase du premier mélange à quatre ondes qui satisfait l'équation

$$\frac{2\pi n_S}{\lambda_S} + \frac{2\pi n_A}{\lambda_A} = \frac{2\pi n_{P1}}{\lambda_{P1}} + \frac{2\pi n_{P2}}{\lambda_{P2}}$$, où $n_S$ est l'indice effectif du mode $LP_{01}$ à $\lambda_S$, $n_A$ l'indice effectif du mode $LP_{11}$ à $\lambda_A$, $\lambda_{P1}$ la longueur de pompe 1, $\lambda_{P2}$ la longueur de pompe 2 et $n_{P1}$, $n_{P2}$ les indices effectifs du mode respectivement à $\lambda_{P1}$ et $\lambda_{P2}$ Considérant que la longueur d'onde $\lambda_P$ peut se scinder en deux en regard du mode guidé, c'est-à-dire que $\lambda_{P1}$ et $\lambda_{P2}$ sont égales et que $n_{P1}$ est l'indice effectif du mode $LP_{01}$ tandis que $n_{P2}$ est l'indice effectif du mode $LP_{11}$, la variation de désaccord de phase est déterminée en faisant varier un paramètre $\Omega$ = $2\pi F$. Ce paramètre $\Omega$ est défini par les équations $\omega_S$ = $\omega_P$ - $\Omega$ et $\omega_A = \omega_P + \Omega$ où $\omega_i$. est la pulsation de l'onde et s'écrit $\frac{2\pi c}{\lambda_i}$. C'est ainsi qu'est obtenue la courbe I du désaccord de phase pour le premier mélange à quatre ondes.

Pour le mélange à quatre ondes secondaire, on reprend l'équation de désaccord de phase, précédemment notée, mais dans laquelle les longueurs d'onde de pompe $\lambda_{P1}$ et $\lambda_{P2}$ sont respectivement de 1064 nm sur le mode $LP_{01}$ et 814 nm sur le mode $LP_{11}$, ce qui permet de déterminer le désaccord de phase. Dans ce cas, la variation de désaccord de phase est déterminée en faisant varier le paramètre $\Omega'=2\pi F'$ qui est défini par le système d'équations $\omega_S = \omega_{P1} - \Omega'$ et $\omega_A = \omega_{P2} + \Omega'$. La courbe II est ainsi obtenue.

L'invention concerne essentiellement un procédé de génération d'un spectre dans le domaine ultraviolet, comprenant les étapes suivantes : entrée dans la fibre 20 du faisceau 16 du laser de pompe 14, génération d'un premier mélange à quatre ondes ou mélange primaire centré sur la longueur d'onde $\lambda_P$ du faisceau laser 26, génération d'un deuxième mélange à quatre ondes ou mélange secondaire centré sur l'une 32 des raies 32, 34 issues du premier mélange à quatre ondes ou raie de pompe secondaire, et élargissement spectral autour de l'une 36 des raies issues du deuxième mélange à quatre ondes.

La raie de la raie de pompe secondaire 32 est d'une longueur d'onde inférieure à 900 nm, et préférentiellement inférieure à 810 nm.

Préférentiellement, la raie 36 d'élargissement spectral dans le domaine ultraviolet est d'une longueur d'onde inférieure à 700 nm.

Avantageusement, le procédé selon l'invention comprend une étape consistant à modifier des paramètres opto-géométriques de la fibre 20, tel que la fraction d'air d/$\Lambda$, par contrainte mécanique, de manière à ajuster le zéro de dispersion de la fibre sur la longueur d'onde du faisceau de pompe 16, ce qui rend les pics générés plus efficaces et permet l'accordabilité des deux mélanges à quatre ondes et notamment d'égaliser F et F'.

L'invention n'est bien entendu pas limitée à la fibre optique microstructurée décrite mais toute fibre optique microstructurée au moins bimodale dont la structure comprend des moyens de génération d'au moins deux mélanges à quatre ondes cascadés sont également compris dans le cadre de l'invention.

La présente invention trouve son application dans de nombreux domaines, tels que le diagnostic biomédical (notamment la réalisation de sources laser blanches pour la cytométrie en flux, la tomographie optique cohérente, la microscopie confocale, l'imagerie de type CARS), la métrologie, les caractérisations optiques, ou encore la spectroscopie.

## Revendications

1. Procédé de génération d'un spectre s'étendant depuis le domaine infrarouge jusque dans le domaine ultraviolet consistant à injecter dans une fibre optique microstructurée (20) au moins bimodale, un faisceau (16) d'un laser de pompe (14) émettant dans une longueur d'onde ($\lambda_P$) du domaine infrarouge, **caractérisé en ce qu'**il comprend les étapes suivantes :

    - génération dans la fibre (20) d'un premier mélange à quatre ondes ou mélange primaire centré sur la longueur d'onde dudit faisceau laser (16),
    - génération dans la fibre (20) d'au moins un deuxième mélange à quatre ondes ou mélange secondaire centré sur l'une (32) des raies (32, 34) issues du premier mélange à quatre ondes ou raie de pompe secondaire, et
    - élargissement spectral autour d'au moins l'une (36) des raies issues du deuxième mélange à quatre ondes.

2. Procédé de génération d'un spectre s'étendant depuis le domaine infrarouge jusque dans le domaine ultraviolet selon la revendication 1, caractérisé en ce la raie de pompe secondaire (32) est d'une longueur d'onde inférieure à 900 nm.

3. Procédé de génération d'un spectre s'étendant depuis le domaine infrarouge jusque dans le domaine ultraviolet selon la revendication 1, caractérisé en ce la raie de pompe secondaire (32) est d'une longueur d'onde inférieure à 810 nm.

4. Procédé de génération d'un spectre s'étendant depuis le domaine infrarouge jusque dans le domaine ultraviolet selon l'une quelconque des revendications précédentes, **caractérisé en ce que** la au moins une raie (36) d'élargissement spectral est d'une longueur d'onde inférieure à 750 nm.

**5.** Procédé de génération d'un spectre s'étendant depuis le domaine infrarouge jusque dans le domaine ultraviolet selon l'une quelconque des revendications précédentes, **caractérisé en ce que** la fibre (20) comprend un profil (22) muni d'un ensemble de trous (24) d'air d'un diamètre d, lesdits trous (24) étant espacés centre-à-centre d'une distance ou pas Λ, la matrice comprenant une fraction d'air d/Λ, et **en ce que** le diamètre d des trous de la fibre (20) est compris entre 2.0 μm et 3.0 μm et ladite fraction d'air d/Λ est comprise entre 0.75 et 0.85, de sorte qu'un élargissement spectral est généré au moins jusqu'à une longueur d'onde de l'ordre de 310 nm.

**6.** Procédé de génération d'un spectre s'étendant depuis le domaine infrarouge jusque dans le domaine ultraviolet selon l'une quelconque des revendications précédentes, **caractérisé en ce que** la fibre (20) est biréfringente et/ou à maintien de polarisation.

**7.** Procédé de génération d'un spectre s'étendant depuis le domaine infrarouge jusque dans le domaine ultraviolet selon l'une des revendications 5 ou 6, **caractérisé en ce qu'**il comprend une étape consistant à modifier des paramètres opto-géométriques de la fibre (20), tel que la fraction d'air d/Λ, par contrainte mécanique.

**8.** Source laser polychromatique, comprenant un laser de pompe (14) et une fibre optique microstructurée (20) au moins bimodale, ledit laser de pompe (14) étant apte à délivrer un faisceau de pompe (16) d'une longueur d'onde λ_P du domaine infrarouge dans ladite fibre optique (20), **caractérisée en ce que** la fibre optique (20) comprend des moyens de génération d'un premier mélange à quatre ondes ou mélange primaire centré sur la longueur d'onde λ_P dudit faisceau laser (16), des moyens de génération d'un deuxième mélange à quatre ondes centré sur l'une (32) des raies (32, 34) issues du premier mélange à quatre ondes ou raie de pompe secondaire, et des moyens d'élargissement spectral autour d'au moins l'une (36) des raies issues du deuxième mélange à quatre ondes.

**9.** Source laser polychromatique selon la revendication précédente, **caractérisée en ce que** les moyens de génération du premier mélange à quatre ondes, les moyens de génération du deuxième mélange à quatre ondes et les moyens d'élargissement de la fibre (20) comprennent un profil (22) muni d'un ensemble de trous (24) d'air d'un diamètre d, lesdits trous (24) étant espacés centre-à-centre d'une distance ou pas Λ, la matrice comprenant une fraction d'air d/Λ, le diamètre d des trous de la fibre (20) étant compris entre 2.0 μm et 3.0 μm et ladite fraction d'air d/Λ étant comprise entre 0.75 et 0.85, de sorte que la source émet depuis le domaine infrarouge jusqu'à au moins une longueur d'onde de l'ordre de 310 nm.

**10.** Source laser polychromatique selon l'une des revendications 8 ou 9, **caractérisée en ce que** le laser émet des impulsions sub nanosecondes.

**11.** Source laser polychromatique selon l'une des revendications 8 à 10, **caractérisée en ce que** le faisceau (16) du laser (14) est d'une longueur d'onde λ_P comprise entre 900 nm et 1100 nm.

**12.** Source laser polychromatique selon l'une des revendications 8 à 11, **caractérisée en ce que** le laser (14) est de type microlaser.

**Patentansprüche**

**1.** Verfahren zum Erzeugen eines sich vom Infrarotbereich bis in den Ultraviolettbereich erstreckenden Spektrums, das darin besteht, in eine wenigstens bimodale, mikrostrukturierte optische Faser (20) den Strahl (16) eines Pumplasers (14) einzubringen, der eine Wellenlänge (λ_p) im Infrarotbereich emittiert, **dadurch gekennzeichnet, dass** dieses die folgenden Verfahrensschritte umfasst:

- in der Faser (20) Erzeugen einer ersten Vier-Wellen-Mischung oder primären Mischung, die auf die Wellenlänge des Laserstrahls (16) zentriert ist,
- in der Faser (20) Erzeugen wenigstens einer zweiten Vier-Wellen-Mischung oder sekundären Mischung, die auf einer (32) der aus der ersten Vier-Wellen-Mischung hervorgegangenen Spektrallinien (32, 34) oder sekundären Pumpspektrallinie zentriert ist, und
- spektrale Verbreiterung um wenigstens einen (36) der Spektrallinien herum, die aus der zweiten Vier-Wellen-Mischung hervorgegangen sind.

**2.** Verfahren zum Erzeugen eines sich vom Infrarotbereich bis in den Ultraviolettbereich erstreckenden Spektrums nach Anspruch 1, **dadurch gekennzeichnet, dass** die sekundäre Pumpspektrallinien (32) eine Wellenlänge unterhalb von 900 nm hat.

**3.** Verfahren zum Erzeugen eines sich vom Infrarotbereich bis in den Ultraviolettbereich erstreckenden Spektrums nach Anspruch 1, **dadurch gekennzeichnet, dass** die sekundäre Pumpspektrallinie (32) eine Wellenlänge unterhalb von 810 nm hat.

**4.** Verfahren zum Erzeugen eines sich vom Infrarotbereich bis in den Ultraviolettbereich erstreckenden Spektrums nach einem der vorhergehenden Ansprüche, **dadurch gekennzeichnet, dass** die oder die wenigstens eine Spektrallinie (36) der spektralen Verbreiterung eine Wellenlänge unterhalb von 750 nm hat.

5. Verfahren zum Erzeugen eines sich vom Infrarotbereich bis in den Ultraviolettbereich erstreckenden Spektrums nach einem der vorhergehenden Ansprüche, **dadurch gekennzeichnet, dass** die Faser (20) ein Profil (22) aufweist, das mit einer Menge von Luftlöchern (24) mit einem Durchmesser d versehen ist, wobei die Löcher (24) von Mitte zu Mitte mit einem Abstand oder einer Entfernung Λ beabstandet sind und die Matrix einen Luftanteil d/Λ aufweist, und dass der Durchmesser d der Löcher der Faser (20) zwischen 2,0 μm und 3,0 μm liegt und der Luftanteil d/Λ zwischen 0,75 und 0,85 liegt, so dass eine spektrale Verbreiterung bis wenigstens einer Wellenlänge in der Größenordnung von 310 nm bewerkstelligt wird.

6. Verfahren zum Erzeugen eines sich vom Infrarotbereich bis in den Ultraviolettbereich erstreckenden Spektrums nach einem der vorhergehenden Ansprüche, **dadurch gekennzeichnet, dass** die Faser (20) doppelbrechend und/oder die Polarisation erhaltend ist.

7. Verfahren zum Erzeugen eines sich vom Infrarotbereich bis in den Ultraviolettbereich erstreckenden Spektrums nach Anspruch 5 oder 6, **dadurch gekennzeichnet, dass** dieses einen Verfahrensschritt aufweist, der darin besteht, die optogeometrischen Parameter der Faser (20), wie den Luftanteil d/Λ, durch mechanische Spannung zu verändern.

8. Polychromatische Laserquelle mit einem Pumplaser (14) und einer wenigstens bimodalen, mikrostrukturierten optischen Faser (20), wobei der Pumplaser (14) dazu eingerichtet ist, einen Pumpstrahl (16) einer Wellenlänge $\lambda_p$ im Infrarotbereich der optischen Faser (20) zuzuführen, **dadurch gekennzeichnet, dass** die optische Faser (20) Mittel zum Erzeugen einer ersten Vier-Wellen-Mischung oder primären Mischung umfasst, die auf die Wellenlänge $\lambda_p$ des Laserstrahls (16) zentriert ist, und Mittel zum Erzeugen einer zweiten Vier-Wellen-Mischung umfasst, die auf eine (32) aus der ersten Vier-Wellen-Mischung hervorgegangene Spektrallinie (32,34) oder sekundäre Pumpspektrallinie zentriert ist, und Mittel für die spektrale Verbreiterung um wenigstens eine (36) der aus der zweiten Vier-Wellen-Mischung hervorgegangenen Spektrallinien umfasst.

9. Polychromatische Laserquelle nach dem vorhergehenden Anspruch, **dadurch gekennzeichnet, dass** die Mittel zum Erzeugen der ersten Vier-Wellen-Mischung, die Mittel zum Erzeugen der zweiten Vier-Wellen-Mischung und die Mittel zur Verbreiterung in der Faser (20) ein Profil (22) aufweisen, das von einer Menge von Luftlöchern (24) mit einem Durchmesser d gebildet ist, wobei die Löcher (24) von Mitte zu Mitte mit einen Abstand oder einer Entfernung Λ beabstandet sind und die Matrix einen Luftanteil d/Λ umfasst wobei der Durchmesser d der Löcher der Faser (20) zwischen 2,0 μm und 3,0 μm liegt und der Luftanteil d/Λ zwischen 0,75 und 0,85 liegt, so dass die Quelle vom Infrarotbereich bis zum Ultraviolettbereich wenigstens eine Wellenlänge in der Größenordnung von 310 nm emittiert.

10. Polychromatische Laserquelle nach einem der Ansprüche 8 oder 9, **dadurch gekennzeichnet, dass** der Laser Pulse unterhalb von Nanosekunden emittiert.

11. Polychromatische Laserquelle nach einem der Ansprüche 8 bis 10, **dadurch gekennzeichnet, dass** der Strahl (16) des Lasers (14) eine Wellenlänge $\lambda_p$ zwischen 900 nm und 1100 nm hat.

12. Polychromatische Laserquelle nach einem der Ansprüche 8 bis 11, **dadurch gekennzeichnet, dass** der Laser (14) von der Art eines Mikrolasers ist.

**Claims**

1. A method for generating a spectrum extending from the infrared range to the ultraviolet range, comprising injecting, into an at least bimodal microstructured optical fibre (20), a beam (16) of a pump laser (14) emitting in a wavelength $(\lambda_p)$ in the infrared range, **characterised in that** it comprises the following steps:

    - generation in the fibre (20) of a first four-wave mixture or primary mixture centred on the wavelength of said laser beam (16),
    - generation in the fibre (20) of at least a second four-wave mixture or secondary mixture centred on one (32) of the lines (32, 34) issuing from the first four-wave mixture or secondary pump line, and
    - spectral broadening around at least one (36) of the lines issuing from the second four-wave mixture.

2. A method for generating a spectrum extending from the infrared range to the ultraviolet range according to claim 1, **characterised in that** the secondary pump line (32) has a wavelength of less than 900 nm.

3. A method for generating a spectrum extending from the infrared range to the ultraviolet range according to claim 1, **characterised in that** the secondary pump line (32) has a wavelength of less than 810 nm.

4. A method for generating a spectrum extending from the infrared range to the ultraviolet range according to any of the preceding claims, **characterised in that** the at least one spectral broadening line (36) has a wavelength of less than 750 nm.

5. A method for generating a spectrum extending from the infrared range to the ultraviolet range according to any of the preceding claims, **characterised in that** the fibre (20) comprises a profile (22) provided with a set of air holes (24) with a diameter d, said holes (24) being spaced centre-to-centre by a distance or pitch $\Lambda$, the matrix comprising a fraction of air d/$\Lambda$, and **in that** the diameter d of the holes of the fibre (20) is between 2.0 $\mu$m and 3.0 $\mu$m and said fraction of air d/$\Lambda$ is between 0.75 and 0.85, so that a spectral broadening is generated at least to a wavelength of around 310 nm.

6. A method for generating a spectrum extending from the infrared range to the ultraviolet range according to any of the preceding claims, **characterised in that** the fibre (20) is birefringent and/or of the polarisation-maintaining type.

7. A method for generating a spectrum extending from the infrared range to the ultraviolet range according to claim 5 or 6, **characterised in that** it comprises a step consisting of modifying optogeometric parameters of the fibre (20), such as the fraction of air d/$\Lambda$, by mechanical stress.

8. A polychromatic laser source, comprising a pump laser (14) and an at least bimodal microstructured optical fibre (20), said pump laser (14) being able to deliver a pump beam (16) with a wavelength $\lambda_p$ of the infrared range in said optical fibre (20), **characterised in that** the optical fibre (20) comprises means for generating a first four-wave mixture or primary mixture centred on the wavelength $\lambda_p$ of said laser beam (16), means for generating a second four-wave mixture centred on one (32) of the lines (32, 34) issuing from the first four-wave mixture or secondary pump line, and means for spectral broadening around at least one (36) of the lines issuing from the second four-wave mixture.

9. A polychromatic laser source according to the preceding claim, **characterised in that** the means for generating the first four-wave mixture, the means for generating the second four-wave mixture and the means for broadening the fibre (20) comprise a profile (22) provided with a set of air holes (24) with a diameter d, said holes (24) being spaced centre-to-centre by a distance or pitch $\Lambda$, the matrix comprising a fraction of air d/$\Lambda$, the diameter d of the holes of the fibre (20) being between 2.0 $\mu$m and 3.0 $\mu$m and said fraction of air d/$\Lambda$ being between 0.75 and 0.85, so that the source emits from the infrared range to at least a wavelength of around 310 nm.

10. A polychromatic laser source according to either claim 8 or 9, **characterised in that** the laser emits sub-nanosecond pulses.

11. A polychromatic laser source according to any of claims 8 to 10, **characterised in that** the beam (16) of the laser (14) has a wavelength $\lambda_p$ of between 900 nm and 1100 nm.

12. A polychromatic laser source according to any of claims 8 to 11, **characterised in that** the laser (14) is of the microlaser type.

Fig.1

Fig.2

Fig.3

Fig.4

Fig.5a

Fig.5b

Fig.6

Fig.7

Fig.8

**EP 2 440 969 B1**

## RÉFÉRENCES CITÉES DANS LA DESCRIPTION

**Documents brevets cités dans la description**

- WO 2005062113 A